Europäisches Patentamt

European Patent Office

Office européen des brevets

(19)

(11) **EP 0 814 065 A1**

(12) **EUROPÄISCHE PATENTANMELDUNG**

(43) Veröffentlichungstag:
29.12.1997 Patentblatt 1997/52

(51) Int. Cl.$^6$: **C04B 22/06**, C04B 32/02

(21) Anmeldenummer: 97109784.5

(22) Anmeldetag: 16.06.1997

(84) Benannte Vertragsstaaten:
AT BE CH DE DK ES FI FR GB GR IE IT LI LU MC NL PT SE

(30) Priorität: 17.06.1996 DE 19624111

(71) Anmelder: Peroxid-Chemie GmbH
82049 Pullach (DE)

(72) Erfinder:
• Zeiss, Werner, Dr.
82547 Eurasburg (DE)
• Hartmann, Christoph, Dr.
82041 Oberhaching (DE)

• Sebb, Werner
82538 Geretsried (DE)
• Ohme, Roland, Dr.
12527 Berlin (DE)

(74) Vertreter:
Huber, Bernhard, Dipl.-Chem. et al
Patentanwälte
H. Weickmann, Dr. K. Fincke
F.A. Weickmann, B. Huber
Dr. H. Liska, Dr. J. Prechtel, Dr. B. Böhm,
Kopernikusstrasse 9
81679 München (DE)

(54) **Mittel und Verfahren zur Herstellung von Bindebaustoffen mit verminderter Dichte**

(57) Zur Herstellung von Bindebaustoffen verminderter Dichte mit Gasporen wird als gasbildendes Mittel mindestens ein Salz der Peroxymonoschwefelsäure ($H_2SO_5$), als Regulator der Treibmittelentwicklung eine Verbindung, ausgewählt aus der Gruppe bestehend aus polyfunktionellen Phosphonsäuren, Phosphor-, Diphosphor- und Polyphosphorsäuren und deren Salzen und gegebenenfalls mindestens ein lösliches Salz der Kieselsäure dem Bindebaustoff zugesetzt.

EP 0 814 065 A1

## Beschreibung

Die Erfindung betrifft Mittel und Verfahren zur Herstellung von Bindebaustoffen veränderbarer Dichte mit Gasporen.

Auf dem Gebiet des Bauwesens wird eine immer bessere Wärmedämmung der Baustoffe mit dem ökotechnologischen Ziel "Energiesparhaus" durch Herabsetzung der Dichte der Baustoffe angestrebt. Dieses Ziel kann vornehmlich durch einen erhöhten Gasporengehalt der Materialien erreicht werden. Bei den Bindebaustoffen bedeutet ein erhöhter Gasporengehalt auch Leichtbau durch Materialeinsparung und energiereduzierte Fertigungstechnologien, wobei gleichzeitig mit der angestrebten Verbesserung der Wärmedämmwerte entscheidende Beiträge zur Senkung der Baukosten erreicht werden.

Bindebaustoffe im Sinne des erfindungsgemäßen Verfahrens sind Zemente, Kalk, Gipse, Mörtel oder Putze sowie die mit diesen hergestellten Mischungen mit Zuschlagstoffen, Fasern, farbgebenden Zusätzen, Verflüssigern, Beschleunigern, Verzögerern, Abdicht- oder Hydrophobiermitteln.

Nach dem Stand der Technik wird z.B. Porenbeton durch intensives Einleiten oder Einarbeiten von Luft hergestellt. Dabei sind aber Trockendichten unter 1,9 kg/Liter kaum erreichbar; der technische Vorteil solcher Porenbetone besteht auch in erster Linie in einer verbesserten Frost- und Tauwasserbeständigkeit; demgegenüber sind die so erreichbaren Verbesserungen der Wärmedämmwerte unbedeutend. Deshalb wurde vorgeschlagen, durch Zusatz von Luftporenbildnern auf Eiweiß- oder Tensidbasis das mechanische Einarbeiten von Luft wirksamer zu gestalten. Gas- bzw. Schaumbetone auf Basis dieser Technologien weisen verbesserte Wärmedämmwerte auf; der Nachteil dieser Verfahrensweise besteht jedoch darin, daß z.B. das Einmischen von Luft außerhalb der Beton-Einschalung in speziellen Mischapparaten vorgenommen werden muß. Bei Transport zur Baustelle sowie beim Vorgang des Einbringens in die vorgesehene Einschalung geht ein Teil der Luftporen wieder verloren, es kommt zu Schrumpfungserscheinungen und inhomogener Dichteverteilung nach dem Abbindevorgang.

Um diese Probleme zu umgehen, wird bei der Herstellung von Leichtbetonen der Porenraum durch Leichtzuschlagstoffe wie Perlite, Blähton, Blähschiefer, Kieselgur, Flugasche, Bimsstein oder vulkanische Lokkermaterialien erhöht. Diese Technologien haben den Nachteil, daß inhomogene Strukturen entstehen; auch können nicht beliebig leichte oder beliebig viel Leichtzuschlagstoffe eingesetzt werden, da es sonst in der Phase vor dem Abbinden der Bindebaustoffe zu unerwünschter Materialtrennung im Sinne des Aufschwimmens der leichten Zuschlag-Partikel in der schwereren flüssigen Matrix kommen kann.

Zur Umgehung dieser Nachteile wurden Verfahren entwickelt, welche anstelle von eingearbeiteter Luft auf chemischem Wege in der Baustoffmatrix Treibmittel erzeugen. Zum Beispiel ist es möglich, in einer alkalischen Grundmischung aus Calciumsilikathydrat durch Zusatz von Aluminiumpulver Wasserstoff als Treibmittel zu erzeugen, und zwar auch während der Phase des Abbindens und Aushärtens des Baustoffs. Dadurch wird eine hervorragende Porosität erzielt.

Allerdings erfordert dieser Prozeß fabrikmäßige Anlagen und Aushärtetemperaturen von weit über 100°C, so daß ein solches, auf Wasserstoffentwicklung aus Aluminiummetall-Zusatz basierendes Verfahren nur in großen industriellen Anlagen zur Herstellung vorgefertigter poröser Bausteine und Fertigteile genutzt, nicht aber auf der Baustelle selbst ausgeführt werden kann.

Auf chemischem Wege erzeugte Treibmittel verwendet auch ein zur Herstellung von Isolierputz vorgeschlagenes Verfahren (DE 40 35 236), welches die durch Zerfall von Kaliummonopersulfat in alkalischem Medium einsetzende Sauerstoffentwicklung als Treibmittel nutzt, wobei Kaliummonopersulfat in Form des leicht zugänglichen und stabilen Tripelsalzes der Zusammensetzung 2 $KHSO_5$ · $KHSO_4$ · $K_2SO_4$ verwendet wird.

Da die Sauerstoffentwicklung aus dem Tripelsalz unter den angewandten Bedingungen sehr rasch erfolgt, bleibt diese Technologie auf die Herstellung von Isolierputz beschränkt. Sie erfordert ein Mischen von Putz und Kaliummonopersulfat im Zeitraum von weniger als einer Minute, wozu Spezialspritzmaschinen erforderlich sind, welche den Mischvorgang und das sofortige Aufspritzen des Putzes in dieser kurzen Zeit ermöglichen.

Nach dem Stand der Technik besteht der Bedarf, chemische Blähmittel für Porenbildung in Bindebaustoffen einzusetzen, wobei Bedingungen und Anforderungen hinsichtlich Anmischzeit, angestrebten Porenvolumen, Aushärtezeit, Aushärtetemperatur, Zuschlagstoffen, erzielbarer Dichteverminderung des ausgehärteten Baustoffs und bauphysikalischen Parametern in weiten Grenzen zwischen den Möglichkeiten des o.g. Verfahrens unter Verwendung von Aluminiumpulver (mit Wasserstoff als Blähmittel) und dem Verfahren mit Kaliummonopersulfat (Sauerstoff als Blähmittel) schwanken können.

Es ist bisher kein Mittel bekannt, durch dessen Zugabemenge und Zugabetechnologie der Luftporengehalt von Bindebaustoffen entsprechend den jeweiligen speziellen bautechnischen Anforderungen variabel und verfahrensmäßig gesteuert werden kann.

In destilliertem Wasser ist Monopersulfat $KHSO_5$ relativ stabil und spaltet in mehreren Tagen Sauerstoff ab

$$2\ KHSO_5 \rightarrow O_2 + 2\ KHSO_4.$$

In alkalischem Medium wird die Zersetzung beschleunigt bis zu Halbwertszeiten (Aktivsauerstoffabfall) von 5 bis 6 Stunden

$$2\ HSO_5\ 2\ OH \rightarrow O_2 + 2\ SO_4 + 2\ H_2O,$$

wobei die Zersetzung in alkalischer, sorgfältig filtrierter Zementsuspensionslösung nur geringfügig schneller als in verdünnter Kalilauge gleicher Alkalikonzentration ist.

Überraschend wurde jedoch gefunden, und hiervon geht die Erfindung aus, daß die Zersetzung von Peroxymonosulfat in alkalischer Zementsuspension - also in Gegenwart der suspendierten Festpartikel des Zements - sehr stark beschleunigt wird. Die Beschleunigung der Reaktion ergab sich sowohl aus der Messung des gebildeten Sauerstoffgases, andererseits auch durch die jodometrische Verfolgung der Reaktion anhand der Abnahme des Aktivsauerstoffs. Sie ist für die Bedingungen der Praxisanwendung der sauerstoffbildenden Zersetzungsreaktion - z.B. als Blähmittel für Porenbeton - von großer Wichtigkeit.

Die Zementsuspension - also die Anwesenheit von Zementpartikeln großer Oberfläche - wirkt demzufolge als ein Heterogenkatalysator der Zersetzungsreaktion

$$Monopersulfat \rightarrow Sauerstoff + Sulfat.$$

Der Chemismus dieser überraschenden Katalysereaktion in den chemischen Elementarschritten ist nicht bekannt. Unter Praxisbedingungen ist in Zementsuspensionen oder Mörteln oder anderen Bindebaustoffen eine außerordentlich hohe Konzentration von katalytisch zersetzend wirkenden Feststoffpartikeln vorhanden, so daß in solchen Systemen die Reaktion

$$2\ HSO_5 + 2OH \rightarrow O_2 + SO_4 + 2\ H_2O$$

schon in einer Minute praktisch vollständig abläuft. Daher scheidet Monopersulfat als Porenbildner für Bindebaustoffe praktisch aus, solange diese Zersetzung nicht gesteuert werden kann.

Aufgabe der Erfindung ist die Schaffung eines Verfahrens und eines Mittels, um die im Prinzip kinetisch bestimmte Sauerstoffentwicklung von Kaliummonopersulfaten im alkalischen Medium des Baustoffes verzögernd zu beeinflußen und damit die Gasentwicklung und das Abbindeverhalten verschiedener Bindebaustoffe besser regulieren zu können.

Überraschend wurde nunmehr gefunden, daß polyfunktionelle Phosphonsäuren oder deren wasserlösliche Salze die Peroxomonosulfatzersetzung in geringer Anwendungskonzentration hemmen und verzögern können. Gleiche Effekte zeigen Polyphosphate, Diphosphate und Phosphate. Sie ergeben den Verzögerungseffekt, wenn man sie in dem Ansatzwasser von Zement- oder Mörtelmischungen löst - gegebenenfalls gemeinsam mit dem Peroxomonosulfat - oder indem man sie dem zuvor trockenen Bindebaustoff zusetzt - wobei das Peroxomonosulfat - vorzugsweise als Tripelsalz - ebenfalls mit zugemischt wird.

Gelöst wird obige Aufgabe daher erfindungsgemäß durch ein Verfahren zur Herstellung von Bindebaustoffen verminderter Dichte mit Gasporen welches dadurch gekennzeichnet ist, daß als gasbildendes Mittel mindestens ein Salz der Peroxymonoschwefelsäure ($H_2SO_5$), als Regulator der Treibmittelentwicklung eine Verbindung ausgewählt aus der Gruppe, bestehend aus polyfunktionellen Phosphonsäuren, Phosphor-, Diphosphor- und Polyphosphorsäuren und deren Salzen und gegebenenfalls mindestens ein lösliches Salz der Kieselsäure dem Bindebaustoff zugesetzt werden.

Ein weiterer Gegenstand der Erfindung ist ein Mittel zur Herstellung von Bindebaustoffen verminderter Dichte mit Gasporen welches dadurch gekennzeichnet ist, daß es mindestens ein Peroxymonosulfat als Gasentwickler, eine oder mehrere Säuren aus der Gruppe polyfunktionelle Phosphonsäuren, Phosphor-, Diphosphor- und Polyphosphorsäuren oder Salze davon als Regulator, und gegebenenfalls ein oder mehrere lösliche Salze der Kieselsäure enthält.

Nach einer erfindungsgemäßen Ausführungsform werden gasbildende Peroxomosulfate und Regulatoren dem trockenen Bindebaustoff, nach einer anderen Ausführungsform dem Anmischwasser zugefügt. Als regulierende Phosphonsäuren werden Etidronsäure, Ethylendiamin-tetramethylenphosphonsäure, Dimethylaminomethan-bis-phosphonsäure, Hydroxyethyl-aminobis-methylenphosphonsäure, Diethylentriamin-penta-methylenphosphonsäure oder Butan-1,2,4-tricarbonsäure-2-phosphonsäure oder ihre Alkali-, Erdalkali-, Ammonium- oder Aluminiumsalze bevorzugt.

Phosphor- oder Polyphosphorsäuren werden besonders bevorzugt in Form ihrer einfach oder zweifach sauren Alkali- oder Ammoniumsalze oder als tertiäre Alkalisalze eingesetzt.

Als lösliche Salze der Kieselsäure können z.B. Natronwasserglas oder/und Kaliumsilikat eingesetzt werden.

Die Erfindung wird nachfolgend in den Beispielen in Verbindung mit der Zeichnung näher veranschaulicht.

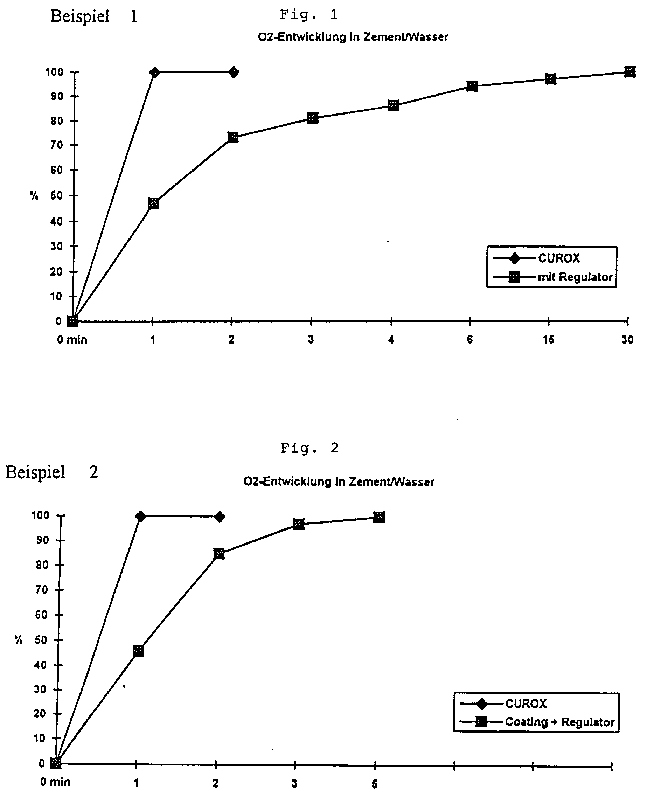

In der Zeichnung stellt Figur 1 die Gasentwicklung mit und ohne Regulator unter den in Beispiel 1 beschriebenen Bedingungen dar;

Figur 2 zeigt eine entsprechende Darstellung für die Zusammensetzung gemäß Beispiel 2;

Figur 3 gibt eine graphische Darstellung, wie bei den Figuren 1 und 2 für die Zusammensetzung von Beispiel 3 wieder;

Figur 4 gibt die entsprechenden Meßwerte für die Zusammensetzung von Beispiel 4 wieder.

In den Beispielen wurde der Nachweis der Wirksamkeit des erfindungsgemäßen Mittels durch jodometrische Analyse des Aktivsauerstoffs in Abhängigkeit von der Zeit oder durch volumetrische Messung der zeitabhängig freigesetzten Sauerstoffmenge durchgeführt. Dabei wurde folgende Meßmethode angewendet:

In einem Y-förmigen Zweischenkelrohr (jeder Schenkel faßt 25 ml) wird in einem Schenkel die zu zersetzende Kaliummonopersulfat-Tripelsalz-Probe (CUROX®-Probe) (1 bis 2 g Einwaage), in dem anderen ein Gemisch von 3 g Portlandzement, 5 ml 2N Natronlauge und 15 ml destilliertes Wasser gefüllt. Das Zweischenkelrohr wird mit einer Gasbürette mit Niveau-Ausgleichsgefäß verbunden, das System geschlossen und danach durch Kippen des Zweischenkelrohres die alkalische Zementsuspension mit der zu prüfenden Kaliummonopersulfat-Tripelsalz-Probe vereinigt. Durch gelegentliches Umschütteln wird eine gleichmäßige Durchmischung erreicht. Zeit und Volumen des entwikkelten Sauerstoffs werden messend verfolgt. Wenn nach mehreren Ablesungen das Sauerstoffvolumen nicht mehr weiter angewachsen ist, wird die Messung beendet und dieser letzte Volumenwert als erzielbarer Endwert der jeweiligen Probe definiert. Die vorher bei verschiedenen Zeiten ermittelten Volumenwerte wurden als "% vom Endwert" als Diagramm über die Zeitachse X aufgetragen. In allen Beispielen wurde Rüdersdorfer Portlandzement nach DIN 1164 CEM II A-L 32,5 R aus Kalkstein verwendet.

Bei längeren Gasentwicklungszeiten wurde aus graphisch-praktischen Gründen die Zeitachse unproportional eingeteilt, d.h. in der Anfangsphase der Zersetzung sind Minuteneinteilungen, später evtl. 5 Minuten- oder 10 Minuteneinteilungen der X-Achse gewählt worden, was bei der Ergebnisbeurteilung beachtet werden muß.

Beispiel 1

Kaliummonopersulfat-Tripelsalz (CUROX®) Zersetzung unter Sauerstoffentwicklung in zementalkalischer Lösung: 3 g Zement, suspendiert in 15 ml Wasser und 5 ml 2N Natronlauge, Zimmertemperatur; Probe 697, Einwaage 1,23 g, Regulator: 1 g 60 %-ige Lösung CUBLEN K 60 (Etidronsäure) mit NaOH neutralisiert werden gemischt. Die Ergebnisse sind in Figur 1 dargestellt. Der maximale Endwert der Sauerstoffentwicklung wurde als Bezugspunkt = 100 % gesetzt. Die Skala der X-Achse ist unproportional geteilt.

Beispiel 2

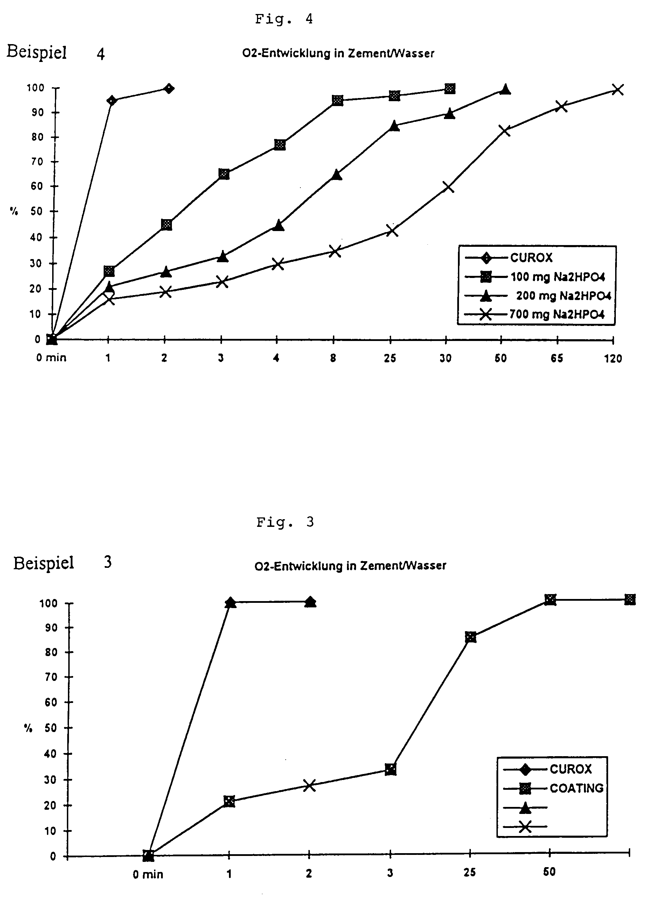

Kaliummonopersulfat-Tripelsalz (CUROX®) Zersetzung unter Sauerstoffentwicklung in zementalkalischer Lösung: 3 g Zement, suspendiert in 15 ml Wasser und 5 ml 2N Natronlauge, Zimmertemperatur, Probe 703, gecoatet mit Di-tetradecylamin, Einwaage 1,27 g, Regulator: 0,7 g CUBLEN 3115 (Ethylendiamintetramethylenphosphonsäurelösung, mit NaOH neutralisiert werden gemischt. Die Ergebnisse sind in Figur 2 dargestellt. Der maximale Endwert der Sauerstoffentwicklung wurde als Bezugspunkt = 100 % gesetzt.

Beispiel 3

Kaliummonopersulfat-Tripelsalz (CUROX®) Zersetzung unter Sauerstoffentwicklung in zementalkalischer Lösung: 3 g Zement, suspendiert in 15 ml Wasser und 5 ml 2N Natronlauge, Zimmertemperatur, Probe 702, ungecoated, Einwaage 1,23 g, Regulator: 0,2 g $NaH_2PO_4$ werden gemischt. Die Ergebnisse sind in Figur 3 dargestellt. Der maximale Endwert der Sauerstoffentwicklung wurde als Bezugspunkt = 100 % gesetzt.

Beispiel 4

Kaliummonopersulfat-Tripelsalz (CUROX®) Zersetzung unter Sauerstoffentwicklung in zementalkalischer Lösung: 3 g Zement, suspendiert in 15 ml Wasser und 5 ml 2N Natronlauge, Zimmertemperatur, Probe 702, ungecoatet, Regulator: $Na_2HPO_4$, Einwaage 1,3 g, Regulator 100, 200, 700 mg. Die Ergebnisse sind in Figur 4 dargestellt. Der maximale Endwert der Sauerstoffentwicklung wurde als Bezugspunkt = 100 % gesetzt. Skala der X-Achse unproportional geteilt.

Beispiel 5

Zur Beeinflussung der Dichte von Formlingen wurden 50 g Zement nach DIN 1164 mit 15 g Wasser angerührt und die Masse in einer becherartigen Form zur Erstarrung gebracht. Nach 8-tägigem Trocknen an der Luft wurde die Dichte des Formlings zu 1,92 bestimmt.

Beispiel 6

50 g Zement wurden mit 1 g Tripelsalz 2 $KHSO_5$ · $KHSO_4$ · $K_2SO_4$ und 0,1 g Etidronsäure als Regulator trocken vermischt und anschließend mit 15 g Wasser verrührt. Man verfuhr wie in Beispiel 5, Dichte des Formlings 1,66. Gegenüber Beispiel 5 beträgt die Zementeinsparung 13,5 %, bezogen auf den gleichen Rauminhalt.

Beispiel 7

50 g Zement wurden mit 15 g Wasser, in welchem 1 g Tripelsalz und 0,14 g $Na_2HPO_4$ als Regulator gelöst waren, angerührt. Danach verfuhr man wie in Beispiel 5. Dichte des Formlings: 1,67.

Beispiel 8

Es wurde wie in Beispiel 6 beschrieben vorgegangen, jedoch mit 0,2 g Amino-trimethylenphosphonsäure. Der erhaltene Formling hatte eine Dichte von 1,62.

**Beispiel 9**

Es wurde wie in Beispiel 7 vorgegangen, das Tripelsalz und das Phosphat wurden jedoch dem trockenen Zement zugesetzt. Nach Einrühren von 15 g Wasser wurde wie in Beispiel 5 verfahren. Dichte des Formlings: 1,61.

**Beispiel 10**

Es wurde wie in Beispiel 9 vorgegangen. Zusätzlich wurden 0,1 g Laurylsulfat dem trocknen Zement zugesetzt. Dichte des erhaltenen Formlings: 1,38. Gegenüber Beispiel 5 beträgt die Einsparung an Zement 28 %, bezogen auf den gleichen Rauminhalt des Formlings. Nach 24-stündigem Trocknen bei 105° betrug die Dichte nur noch 1,20.

**Beispiel 11**

25 g Zement wurden mit 25 g Kieselgur (DIAMOL GM) gemischt und 1 g Tripelsalz und 0,1 g $NaH_2PO_4$ zugesetzt. Nach Verrühren mit 16 g Wasser verfuhr man wie in Beispiel 5. Dichte des Formlings: Bei gleichem Rauminhalt betrug die Masseeinsparung gegenüber Beispiel 5 39,5 %.

**Patentansprüche**

1. Verfahren zur Herstellung von Bindebaustoffen verminderter Dichte mit Gasporen
   **dadurch gekennzeichnet,**
   daß als gasbildendes Mittel mindestens ein Salz der Peroxymonoschwefelsäure ($H_2SO_5$), als Regulator der Treibmittelentwicklung eine Verbindung ausgewählt aus der Gruppe, bestehend aus polyfunktionellen Phosphonsäuren, Phosphor-, Diphosphor- und Polyphosphorsäuren und deren Salzen und gegebenenfalls mindestens ein lösliches Salz der Kieselsäure dem Bindebaustoff zugesetzt werden.

2. Verfahren nach Anspruch 1,
   **dadurch gekennzeichnet,**
   daß gasbildendes Peroxymonosulfat und Regulator dem trockenen Bindebaustoff zugesetzt werden.

3. Verfahren nach Anspruch 1,
   **dadurch gekennzeichnet,**
   daß Peroxymonosulfat und Regulator dem Anmischwasser für den Bindebaustoff zugesetzt werden.

4. Verfahren nach einem der vorhergehenden Ansprüche,
   **dadurch gekennzeichnet,**
   daß das Peroxymonosulfat dem trocknen Bindebaustoff, der Regulator dem Anmischwasser zugegeben werden.

5. Verfahren nach einem der Ansprüche 1 bis 3,
   **dadurch gekennzeichnet,**
   daß das Peroxymonosulfat dem Anmischwasser, der Regulator dem Bindebaustoff zugesetzt werden.

6. Verfahren nach einem der vorhergehenden Ansprüche,
   **dadurch gekennzeichnet,**
   daß als Regulator Etidronsäure, Ethylendiamintetramethylenphosphorsäure, Diethylaminomethan-bis-phosphorsäure, Hydroxyethyl-amino-bis-methylenphosphonsäure, Diethylentriamin-pentamethylenphosphorsäure, Butan-1,2,4-tricarbonsäure-2-phosphonsäure, ein Alkali-, Erdalkali-, Ammonium- oder Aluminiumsalz oder Mischungen davon verwendet werden.

7. Verfahren nach einem der vorhergehenden Ansprüche,
   **dadurch gekennzeichnet,**
   daß als lösliche Salze der Kieselsäure Natronwasserglas oder/und Kaliumsilikat verwendet werden.

8. Verfahren nach einem der vorhergehenden Ansprüche,
   **dadurch gekennzeichnet,**
   daß man als Regulator die Phosphor- oder Polyphosphorsäure in Form ihrer einfach oder zweifach sauren Alkali- oder Ammoniumsalze oder als tertiäres Alkalisalz einsetzt.

9. Verfahren nach einem der vorhergehenden Ansprüche,
   **dadurch gekennzeichnet,**
   daß man die Peroxomonoschwefelsäure als Tripelsalz der Formel 2 $KHSO_5 \cdot KHSO_4 \cdot K_2SO_4$ einsetzt.

10. Mittel zur Regulierung der Gasentwicklung bei der Herstellung von Bindebaustoffen verminderter Dichte durch Gasporenbildung,
    **dadurch gekennzeichnet,**
    daß es mindestens ein Peroxymonosulfat als Gasentwickler, eine oder mehrere Säuren aus der Gruppe polyfunktionelle Phosphonsäuren, Phosphor-, Diphosphor- und Polyphosphorsäuren oder Salze davon als Regulator, und gegebenenfalls ein oder mehrere lösliche Salze der Kieselsäure enthält.

11. Mittel nach Anspruch 10,
    **dadurch gekennzeichnet,**
    daß es eine oder mehrere Substanzen ausgewählt aus Etidronsäure, Ethylendiamin-tetramethylenphosphorsäure, Diethylaminomethan-bis-phosphorsäure, Hydroxyethyl-amino-bis-methylen-phosphonsäure, Diethylentriamin-penta-methylen-phosphorsäure, Butan-1,2,4-tricarbonsäure-2-phosphonsäure, einem Alkali-, Erdalkali-, Ammonium- oder Aluminiumsalz oder Gemische davon enthält.

## Beispiel 1

### Fig. 1
**O2-Entwicklung in Zement/Wasser**

## Fig. 2

## Beispiel 2
**O2-Entwicklung in Zement/Wasser**

Fig. 4

Beispiel 4                    O2-Entwicklung in Zement/Wasser

Fig. 3

Beispiel 3                    O2-Entwicklung in Zement/Wasser

**Europäisches Patentamt**

**EUROPÄISCHER RECHERCHENBERICHT**

Nummer der Anmeldung

EP 97 10 9784

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y,D | DE 40 35 236 C (WACHTER KG HINDELANG BAUSTOFFWERK BAUTECHNIK) 2.Januar 1992 <br> * Spalte 1, Zeile 42 - Spalte 1, Zeile 58 * <br> --- | 1-11 | C04B22/06 <br> C04B32/02 |
| Y | US 4 350 535 A (ISHIJIMA SHIZUO ET AL) 21.September 1982 <br> * Spalte 1, Zeile 61 - Spalte 2, Zeile 18 * <br> * Spalte 3, Zeile 53 - Spalte 4, Zeile 6 * <br> * Tabellen 1-3 * <br> --- | 1-11 | |
| Y | DATABASE WPI <br> Section Ch, Week 9423 <br> Derwent Publications Ltd., London, GB; <br> Class E11, AN 94-186313 <br> XP002041999 <br> & JP 06 122 573 A (ASAHI KASEI METALS KK) , 6.Mai 1994 <br> * Zusammenfassung * <br> --- | 1-11 | |
| Y | GB 930 502 A (WILLEM BEUKERS) <br> * Seite 1, Zeile 27 - Seite 1, Zeile 45 * <br> * Seite 3, Zeile 23 - Seite 3, Zeile 29 * <br> --- | 1-11 | **RECHERCHIERTE SACHGEBIETE (Int.Cl.6)** <br> C04B |
| Y | US 4 401 471 A (ECKARDT PETER ET AL) 30.August 1983 <br> * Spalte 2, Zeile 5 - Spalte 2, Zeile 24 * <br> * Spalte 3, Zeile 36 - Spalte 3, Zeile 45 * <br> * Spalte 4, Zeile 60 - Spalte 5, Zeile 2 * <br> --- <br> -/-- | 1-11 | |

Der vorliegende Recherchenbericht wurde für alle Patentansprüche erstellt

| Recherchenort | Abschlußdatum der Recherche | Prüfer |
|---|---|---|
| MÜNCHEN | 29.September 1997 | Mini, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

Europäisches Patentamt

**EUROPÄISCHER RECHERCHENBERICHT**

Nummer der Anmeldung

EP 97 10 9784

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | US 4 043 825 A (MULLER MARTIN ET AL) 23.August 1977 <br> * Spalte 1, Zeile 37 - Spalte 1, Zeile 40 * <br> * Spalte 2, Zeile 15 - Spalte 2, Zeile 23 * <br> * Spalte 2, Zeile 59 - Spalte 2, Zeile 61 * <br> * Beispiele 1-4 * <br> --- | 1-11 | |
| A | DE 27 44 393 A (KRAMER GMBH & CO KG HANS) 5.April 1979 <br> * Ansprüche 1-7 * <br> --- | 1-11 | |
| A | PATENT ABSTRACTS OF JAPAN vol. 095, no. 003, 28.April 1995 & JP 06 345559 A (SEKISUI CHEM CO LTD), 20.Dezember 1994, <br> * Zusammenfassung * <br> ----- | | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| MÜNCHEN | 29.September 1997 | Mini, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument